# EUROPÄISCHE PATENTANMELDUNG

(11) **EP 2 975 081 A1**
(43) Veröffentlichungstag der Anmeldung: **20.01.2016**
(21) Anmeldenummer: 15176861.1
(22) Anmeldetag: 15.07.2015
(51) Int. Cl.: C08J 9/00, C08L 25/04, C08K 3/04, C08J 9/12, C08J 9/16, C08J 9/232

(54) **Neuartige polystyrolhartschaumstoffe**

(30) Priorität: 15.07.2014 DE 102014213685
(71) Anmelder: SGL Carbon SE, 65201 Wiesbaden (DE)
(72) Erfinder: FROHS, Wilhelm, 86695 Allmannshofen (DE); HANDL, Werner, 90518 Altdorf (DE)

(57) **Zusammenfassung**

Die vorliegende Erfindung betrifft Polystyrolhartschaumstoffe enthaltend grünen oder kalzinierten Steinkohlenteerpechkoks, Braunkohlenkoks oder Mischungen davon, Formkörper enthaltend diese Polystyrolhartschaumstofife und die Verwendung von diesen Formkörpern zur Wärmedämmung.

## Beschreibung

Die vorliegende Erfindung betrifft Polystyrolhartschaumstoffe enthaltend grünen oder kalzinierten Steinkohlenteerpechkoks, Braunkohlenkoks oder Mischungen davon, Formkörper enthaltend diese Polystyrolhartschaumstoffe und die Verwendung von diesen Formkörpern zur Wärmedämmung.

Polystyrolhartschaumstoffe sind seit langem bekannt und werden unter anderem als Wärmedämmstoffe in Form von Platten im Bauwesen eingesetzt. Der Polystyrolhartschaumstoff weist eine geschlossenzellige Struktur auf, d.h. dieser Schaumstoff besteht zu wenigen Prozent aus festem Polystyrol und überwiegend aus eingeschlossener Luft. Diese geschlossenzellige Struktur führt zu einer geringen Wärmeleitfähigkeit, welche dem Polystyrolhartschaumstoff die gute Eignung als Wärmedämmstoff verleiht. Hierbei hat die Dichte des Polystyrolhartschaumstoffs, welche vom Aufschäumungsgrad der Polystyrolpartikel bestimmt wird, einen entscheidenden Einfluss auf die Wärmeleitfähigkeit. Die im Bauwesen verwendeten Wärmedämmplatten aus Polystyrolhartschaum weisen beispielsweise Dichten von 20 oder 30 kg/m³ auf, was einer Wärmeleitfähigkeit von 40 bis 35 mW/m·K entspricht. Um möglichst wenig Polystyrol einzusetzen, d.h. um Material einzusparen, wurde auch Polystyrolhartschaumstoff mit einer Dichte von unter 20 kg/m³ in Betracht gezogen, allerdings besitzt dieser Polystyrolhartschaumstoff eine zu hohe Wärmeleitfähigkeit von mehr als 45 mW/m·K. Um Polystyrolhartschaumstoffplatten aufweisend Dichten von unter 30 kg/m³, vorzugsweise von unter 20 kg/m³, bereitzustellen, die trotz der genannten niedrigen Dichte eine geringere, zufriedenstellende Wärmeleitfähigkeit für die Verwendung als Dämmstoff besitzen, ist es bekannt, dem Polystyrolhartschaumstoff athermane Materialien zuzusetzen. Unter athermanen Materialien werden Materialien verstanden, welche die Wärme, insbesondere die Wärme bedingt durch Infrarotstrahlung, absorbieren. Dementsprechend vermindert also der Zusatz von athermanen Materialien die Strahlungsdurchlässigkeit bei dem Polystyrolhartschaumstoff. Als athermane Materialien, welche dem Polystyrolhartschaumstoff zugesetzt werden können, wurden Metalloxide, z.B. Al₂O₃ oder Fe₂O₃, Nichtmetalloxide, z.B. SiO₂, Metallpulver, Aluminiumpulver, Russ, Graphit, kalzinierter Petrolkoks, Meta-Anthrazit, Anthrazit-oder organische Farbstoffe bzw. Farbstoffpigmente vorgeschlagen (EP 0620246, WO 97/45477, WO 98/51734, WO 00/43442, WO 2010/031537, DE 202010013 850, DE 202010013851). Durch Zugabe dieser athermanen Materialien kann ein Polystyrolhartschaumstoff hergestellt werden, welcher eine Dichte von unter 20 kg/m³ und eine Wärmeleitfähigkeit von weniger als 40 mW/m·K, vorzugsweise weniger als 35 mW/m·K, aufweist. Bei Verwendung von fein gemahlenem Graphit oder kalziniertem Petrolkoks als athermanes Material ist allerdings eine energieintensive Mahlung nötig. Weiterhin ist es schwierig, die beispielsweise gemahlenen Graphitpartikel in der Polystyrol-Matrix zu dispergieren. DE 202010013850 beschreibt die Verwendung von kohlenstoffhaltigen athermanen Materialien, wie beispielsweise Meta-Anthrazit oder Anthrazit, welche sowohl graphitische als auch turbostratische Strukturen aufweisen und somit in die Klasse graphitischer Kohlenstoffe gehören (siehe IUPAC Nomenklatur). Die Polystyrolhartschaumstoffe enthaltend solche athermanen Partikel weisen bedingt durch die teilweise graphitische Struktur dieser Partikel eine erhöhte intrinsische Wärmeleitung auf, was zu einem erhöhten Wärmeleitfähigkeitswert - und damit einer schlechteren Wärmedämmung - führt.

Daher ist es eine Aufgabe der vorliegenden Erfindung, einen alternativen Polystyrolhartschaumstoff enthaltend ein athermanes Material bereitzustellen, der sich für die Wärmedämmung eignet, welcher eine Dichte von unter 40 kg/m³, vorzugsweise unter 20 kg/m³und eine Wärmeleitfähigkeit von weniger als 40 mW/m·K, vorzugsweise von weniger als 35 mW/m·K aufweist. Das hierbei zugesetzte athermane Material soll eine energiegünstigere Mahlung erlauben, wobei die gemahlenen Teilchen in der gewünschten Plättchenform erhalten werden und diese gemahlenen Teilchen sich zudem gut in einer Polystyrol-Matrix dispergieren lassen. Weiterhin soll das athermane Material nicht graphitische Strukturen aufweisen, um die intrinsische Wärmeleitung gering zu halten.

Im Rahmen der vorliegenden Erfindung wird diese Aufgabe gelöst durch einen Polystyrolhartschaumstoff, welcher grüne oder kalzinierte Steinkohlenteerpechkoksteilchen, bevorzugt kalzinierte Steinkohlenteerpechkoksteilchen, oder Braunkohlenkoksteilchen, enthält. Hierbei fungieren sowohl die Steinkohlenteerpechkoksteilchen als auch die Braunkohlenkoksteilchen als athermanes Material. Es ist auch möglich, Mischungen davon, d.h. eine Mischung aus grünen und kalzinierten Steinkohlenteerpechkoksteilchen, eine Mischung aus grünen Steinkohlenteerpechkoksteilchen und Braunkohlenkoksteilchen, eine Mischung aus kalzinierten Steinkohlenteerpechkoksteilchen und Braunkohlenkoksteilchen oder eine Mischung aus grünen und kalzinierten Steinkohlenteerpechkoksteilchen und Braunkohlenkoksteilchen als athermanes Material einzusetzen. Im Rahmen der Erfindung werden besonders bevorzugt kalzinierte Steinkohlenteerpechkoksteilchen als athermanes Material verwendet.

Wenn im Folgenden von Steinkohlenteerpechkoksteilchen gesprochen wird, sind damit sowohl die grünen als auch die kalzinierten Steinkohlenteerpechkoksteilchen gemeint. Im Falle, dass entweder nur grüne oder nur kalzinierte Steinkohlenteerpechkoksteilchen gemeint sind, wird in diesen Fällen explizit von grünen oder kalzinierten Steinkohlenteerpechkoksteilchen gesprochen.

Erfindungsgemäß wurde erkannt, dass Polystyrolhartschaumstoffe enthaltend Braunkohlekoksteilchen und/oder Steinkohlenteerpechkoksteilchen, eine Dichte von unter 40 kg/m³, vorzugsweise unter 20 kg/m³, und eine Wärmeleitfähigkeit von weniger als 40 mW/m·K, vorzugsweise weniger als 35 mW/m·K aufweisen, d.h. es ist möglich, die gewünschten Wärmedämmeigenschaften zur Verfügung zu stellen. Zudem lassen sich sowohl die Steinkohlenteerpechkoksteilchen als auch die Braunkohlenkoksteilchen im Vergleich mit z.B. Graphitteilchen (Naturgraphit oder synthetischer Graphit) energiegünstiger mahlen, da die entsprechende Durchsatzleistung erhöht ist, wobei zusätzlich der Anteil an unbrauchbarem Nebenprodukt (feiner Filterstaub) im Vergleich zu Graphit geringer ist. Darüber hinaus können sowohl die gemahlenen Steinkohlenteerpechkoksteilchen als auch die Braunkohlenkoksteilchen in der gewünschten Plättchenform erhalten werden und im Vergleich zu Graphitteilchen lassen sich diese Teilchen besser in der Polystyrol-Matrix dispergieren, da sie auf Grund ihrer Oberflächeneigenschaften besser von der Polystyrol-Matrix benetzt und somit besser dispergiert werden. Es hat sich überraschend herausgestellt, dass sowohl die Steinkohlenteerpechkoksteilchen als auch die Braunkohlenkoksteilchen weniger Agglomerate bilden und deshalb zur homogenen Dispergierung weniger Scherkräfte benötigen. Dies ist insbesondere bei der Einarbeitung dieser Teilchen im Suspensions- und/oder Emulsionspolymerisationsverfahren von Vorteil. In Bezug auf eine bessere Wärmedämmung ist es vorteilhaft, dass sowohl die Steinkohlenteerpechkoksteilchen als auch die Braunkohlenkoksteilchen keine graphitischen Strukturen aufweisen, was zu einer geringeren intrinsischen Wärmeleitung beiträgt.

Gemäß der vorliegenden Erfindung kann es sich bei dem Polystyrolhartschaumstoff um extrudierten Polystyrol-Hartschaum (XPS) oder Polystyrol-Partikelschaum (EPS) handeln.

Eine Unterscheidung der Hartschaumstoffe erfolgt gemäß dem Herstellungsverfahren. XPS wird auf Extrusionsanlagen als kontinuierlicher Schaumstoffstrang hergestellt; hierbei wird Polystyrol im Extruder aufgeschmolzen und nach Zugabe eines Treibmittels, wie z.B. CO₂, durch eine Breitschlitzdüse kontinuierlich ausgetragen, wobei sich hinter der Breitschlitzdüse der Schaumstoffstrang aufbaut. Mit diesem Verfahren lassen sich Schaumstoffe mit einer Dicke zwischen 20 und 200 mm herstellen. Nach Durchlaufen einer Kühlzone wird mit nachgeschalteten Maschinen der Schaumstoffstrang zu der gewünschten Form, d.h. zu Blöcken, Platten oder Formteilen, gesägt. Dieser extrudierte Polystyrolhartschaum ist ein geschlossenzelliger Schaumstoff, nimmt nur geringe Mengen an Feuchtigkeit auf und ist alterungsbeständig. XPS wird beispielsweise unter dem Namen Styrodur® C oder Styrofoam® vertrieben. Bei der Herstellung von EPS wird Polystyrolgranulat (Polystyrol-Gries), in welches das Treibmittel Pentan einpolymerisiert ist, mit Temperaturen von über 90 °C vorgeschäumt. Durch die Temperatur verdampft das Treibmittel und bläht das thermoplastische Grundmaterial bis auf das 20 bis 50-fache zu Polystyrol-Schaumpartikeln auf. Aus diesen Schaumpartikeln werden dann in diskontinuierlich oder kontinuierlich arbeitenden Anlagen durch eine zweite Heißdampfbehandlung zwischen 110 °C und 120 °C Blöcke, Platten oder Formteile hergestellt. EPS stellt einen überwiegend geschlossenzelligen Dämmstoff mit eingeschlossener Luft dar, wobei EPS zu 98 % aus Luft besteht und zudem feuchtebeständig ist. EPS wird beispielsweise unter dem Namen Styropor@ vertrieben. Polystyrol, verwendbar für die vorliegende Erfindung, kann durch eine Suspensionspolymerisation von beispielsweise Styrol in Gegenwart von Steinkohlenteerpechkoksteilchen oder Braunkohlekoksteilchen erhalten werden. Bei diesem Verfahren wird das Styrol in wässriger Suspension in Gegenwart von Steinkohlenteerpechkoksteilchen oder Braunkohleteilchen polymerisiert, und die Zusetzung eines Treibmittels, wie beispielsweise von Pentan, erfolgt vor, während oder nach der Polymerisation. Bei der Emulsionspolymerisation wird beispielsweise Styrol in Wasser emulgiert, wobei zur Emulsionsstabilisierung Emulgatoren eingesetzt werden. Die verwendeten Initiatoren für die Polymerisation sind wasserlöslich, wobei die Polymerisation ebenfalls in Gegenwart von Steinkohlenteerpechkoksteilchen oder Braunkohlenkoksteilchen stattfindet.

Als Polymerisate können bei den oben beschriebenen Verfahren expandierbare Styrolpolymerisate, insbesondere aus Homo- und Copolymeren von Styrol, vorzugsweise glasklares Polystyrol (GPPS), Schlagzähpolystyrol (HIPS), anionisch polymerisiertes Polystyrol oder Schlagzähpolystyrol (A-IPS), Styrol-alpha-Methylstyrol-copolymere, Acrylnitril-Butadien-Styrolpolymerisate (ABS), Styrol-Acryl-nitril (SAN) Acrylnitril-Styrol-Acrylester (ASA), Methyacrylat-Butadien-Styrol (MBS) und Methylmethacrylat-Acrylnitril, eingesetzt werden.

Bevorzugt weist das Polystyrol ein Gewichtsmittel M_{w} im Bereich von 150.000 g/mol bis 350.000 g/mol, besonders bevorzugt von 150.000 g/mol bis 300.000 g/mol, ganz besonders bevorzugt von 180.000 g/mol bis 250.000 g/mol auf. Die Bestimmung des Gewichtsmittels M_{w} kann über die Gelpermeationschromatographie bei Raumtemperatur erfolgen, wobei als Elutionsmittel beispielsweise Tetrahydrofuran verwendet werden kann.

Im Rahmen der Erfindung wird es bevorzugt, dass sowohl die Steinkohlenteerpechkoksteilchen als auch die Braunkohlenkoksteilchen im Polystyrolhartschaumstoff homogen verteilt vorliegen. Diese homogene Verteilung sowohl der Steinkohlenteerpechkoksteilchen als auch der Braunkohlenkoksteilchen im Polystyrolhartschaumstoff, insbesondere beim Polystyrol-Partikelschaum (EPS), führt einerseits zu keiner Beeinträchtigung der feinen Zellstruktur der Styrolpolymerisatteilchen, insbesondere der expandierten Styrolpolymerisatteilchen, und andererseits ergeben sich verbesserte Wärmedämmeigenschaften des hergestellten Polymerhartschaumstoffs. Folglich wirken weder die Steinkohlenteerpechkoksteilchen noch die Braunkohlenkoksteilchen bei der Herstellung von beispielsweise EPS störend bei der Keimbildung. Diese homogene Verteilung der Steinkohlenteerpechkoksteilchen als auch der Braunkohlekoksteilchen wird auch durch die gute Dispergierbarkeit dieser Teilchen in der Polystyrol-Matrix unterstützt. Auf Grund der Oberflächeneigenschaften dieser Teilchen können diese von der Polystyrol-Matrix gut benetzt werden, was bei der Dispergierung dafür sorgt, dass die Agglomerate besser zerteilt werden, d.h. es liegen insgesamt weniger Agglomerate in der Polystyrol-Matrix vor.

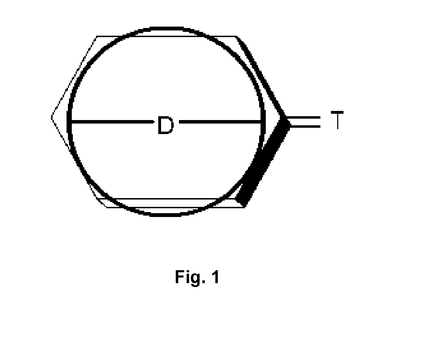

In einer weiteren bevorzugten Ausführungsform der vorliegenden Erfindung sind sowohl die Steinkohlenteerpechkoksteilchen als auch die Braunkohlenkoksteilchen plättchenförmig. Die Plättchenform dieser Teilchen führt einerseits ebenfalls zu keiner Beeinträchtigung der feinen Zellstruktur der Styrolpolymerisatteilchen, insbesondere der expandierten Styrolpolymerisatteilchen, andererseits weisen die Plättchen eine beispielsweise im Vergleich zur Kugelform größere Oberfläche auf, wodurch diese Plättchen stark reflektierend auf die einfallende Infrarotstrahlung einwirken. In einer noch weiteren bevorzugten Ausführungsform der vorliegenden Erfindung weisen sowohl die Steinkohlenteerpechkoksteilchen als auch die Braunkohlenkoksteilchen ein Aspektverhältnis von größer 2, bevorzugt von größer 10, besonders bevorzugt von größer 20 auf. Vorteilhafterweise liegen diese Aspektverhältnisse im Bereich von größer 2 bis 20, besonders bevorzugt im Bereich von größer 10 bis 50 und ganz besonders bevorzugt im Bereich von größer 20 bis 100. Unter Aspektverhältnis wird der Kreisdurchmesser (D) der Fläche des Plättchens zu der Dicke (T) des Plättchens verstanden, so wie es in Figur 1 gezeigt wird.

Bei diesen Aspektverhältnissen wird die einfallende Infrarotstrahlung besonders gut reflektiert. Die gute Reflexion der Infrarotstrahlung bedingt, dass diese Strahlung nur geringfügig absorbiert wird, was dazu führt, dass sich beispielweise Formkörper hergestellt aus dem erfindungsgemäßen Polystyrolhartschaumstoff bei Sonneneinstrahlung nicht stark erwärmen und damit nicht verformt werden.

Im Rahmen der Erfindung wird es bevorzugt, dass die Steinkohlenteerpechkoksteilchen oder die Braunkohlenkoksteilchen einen Durchmesser d₅₀ von 0,2 bis 20,0 µm, besonders bevorzugt von 0,5 bis 15,0 µm, ganz besonders bevorzugt von 1,0 bis 10,0 µm, am höchsten bevorzugt von 4,0 bis 8,0 µm aufweisen. Der d₅₀-Wert gibt die mittlere Teilchengröße an, wobei 50 % der Teilchen kleiner sind als der angegebene Wert. Der d₁₀-Wert dieser Teilchen liegt bevorzugt bei 0,1 bis 5,0 µm, besonders bevorzugt bei 0,2 µm bis 4,0 µm und am höchsten bevorzugt bei 0,5 µm bis 3,0 µm; der d₉₈-Wert dieser Teilchen liebt bevorzugt bei 15,0 bis 25,0 µm, besonders bevorzugt bei 16,0 bis 23,0 µm. Unter dem d₁₀-Wert bzw. dem d₉₈-Wert wird verstanden, dass 10 % der Teilchen bzw. 98 % der Teilchen kleiner sind als der angegebene Wert. Im Rahmen der Erfindung wird besonders bevorzugt, dass die Steinkohlenteerpechkoksteilchen oder die Braunkohlenkoksteilchen einen d₁₀-Wert von 0,5 bis 3,0 µm, einen d₅₀-Wert von 4,0 bis 8,0 µm und einen d₉₈-Wert von 16,0 bis 23,0 µm aufweisen.

Steinkohlenteer, welcher für die Herstellung von Steinkohlenteerpechkoks verwendet wird, entsteht als Nebenprodukt bei der Herstellung von Hütten- oder Zechenkoks durch die Verkokung von Kokskohle aus Kokskammern bestehenden Koksofenbatterien (Kokereien) bei einer Temperatur von mehr als 1000 °C. Hierbei fällt Steinkohlenteer mit ungefähr 4 - 5 Gewichtsprozent (Gew.-%) bezogen auf das Einsatzgewicht der Kokskohle an. Nach der Destillation des Steinkohlenteers zu einem Pech mit einem Erweichungspunkt von ungefähr 60 °C dient dieses Pech als Rohstoffzulauf für den sogenannten "Delayed Coker". In diesem Delayed Coker wird grüner Steinkohlenteerpechkoks durch die Verkokung von Steinkohlenteerpech bei einer Temperatur von ungefähr 480°C erhalten. Dieser Verkokungsprozess des Delayed Coking ist ein aus der Mineralölindustrie bekanntes thermisches Verfahren, um schwere Destillations- und Crackrückstände in Benzin und Diesel zu konvertieren. Grundsätzlich können zur Herstellung von grünem Steinkohlenteerpechkoks auch andere Verkokungsverfahren, wie zum Beispiel Kammerverkokung oder die Verkokung in Retorten, angewendet werden. Wenn dieser grüne Steinkohlenteerpechkoks in einem anschließenden Schritt bei einer Temperatur von 1100 °C bis 1500 °C kalziniert wird, um verbliebene flüchtige Bestandteile auszutreiben, wird kalzinierter Steinkohlenteerpechkoks erhalten. Diese Kalzinierung kann in einem Drehrohrkalzinierer, Drehtellerkalzinierer oder auch in einem vertikalen Schachtkalzinierer erfolgen.

Im Rahmen der Erfindung werden als bevorzugte kalzinierte Steinkohlenteerpechkokse kalzinierte Steinkohlenteerpechnadelkokse und/oder kalzinierte (semi-)isotrope Steinkohlenteerpechkokse eingesetzt. Es ist auch möglich, eine Mischung aus semi-isotropem und isotropem Steinkohlenteerpechkoks oder eine Mischung aus kalziniertem Steinkohlenteerpechnadekoks, semi-isotropem und isotropem Steinkohlenteerpechkoks zu verwenden.

Hierbei weisen die kalzinierten Steinkohlenteerpechnadelkokse bevorzugt einen thermischen Ausdehnungskoeffizienten (CTE) von 0,0 - 0,3 x 10⁻⁶ K⁻¹, die semiisotropen Steinkohlenteerpechkokse bevorzugt einen CTE von 2,0 bis 3,5 x 10⁻⁶ K⁻¹ und die kalzinierten isotropen Steinkohlenteerpechkokse bevorzugt einen CTE von 3,5 bis 5,5 x 10⁻⁶ K⁻¹ auf.

Braunkohlenkoks kann durch die Verkokung von Braunkohle hergestellt werden, wobei diese Verkokung grundsätzlich in allen industriell eingesetzten Herd- und Kammeröfen, Drehrohröfen oder Drehtelleröfen erfolgen kann. Die Verkokungstemperaturen können hierbei in einem Bereich von 800 °C bis 1400 °C, bevorzugt von 1200 °C liegen.

Erfindungsgemäß eingesetzte grüne und kalzinierte Steinkohlenteerpechkokse oder Braunkohlenkokse können wie folgt charakterisiert werden:

| | Braunkohlekoks | Steinkohleteerpechkoks |
|---|---|---|
| CTE [10⁻⁶K⁻¹] | | 0,00 - 5,5 |
| Schüttdichte [g/cm³] | | 0,70 - 1,00 |
| Wasserstoffgehalt [Gew.-%] | 0,20 - 0,40 | 0,035 - 0,150 |
| Stickstoffgehalt [Gew.-%] | 0,05 - 0,40 | 0,30 - 2,00 |
| Schwefelgehalt [Gew.-%] | 0,28 - 1,00 | 0,15 - 0,60 |
| Aschegehalt [Gew.-%] | 2,00 - 13,50 | 0,02 - 0,60 |
| Kohlenstoffgehalt [Gew.-%]: | 85,00 - 97,50 | 96,70 - 99,50 |

Die Messung des CTE entspricht DIN 51909, die Probenherstellung DIN 51930. Die Helium-Dichte erfolgt gemäß DIN 51915, die Schüttdichte gemäß DIN 51916, der Wasserstoff-, Stickstoff- und Schwefelgehalt gemäß DIN 51372 und der Aschgehalt gemäß DIN 51903. Die Bestimmung des Kohlenstoffgehalts ergibt sich rechnerisch. Des weiteren zeichnet sich Braunkohlenkoks durch seine vergleichsweise hohe spezifische Oberfläche aus. Diese ist größer als 50 m²/g und kann bis zu 500 m²/g (gemessen nach ASTM D 3037/89) erreichen. Durch Aktivierung kann diese spezifische Oberfläche bis auf 1000 m²/g erhöht werden.

In einer noch weiteren bevorzugten Ausführungsform der vorliegenden Erfindung enthält der Polystyrolhartschaumschaumstoff Steinkohlenteerpechkoksteilchen oder Braunkohlekoksteilchen in einer Menge von 0,5 Gew.-% bis 10,0 Gew.-%, bevorzugt von 1,0 Gew.-% bis 8,0 Gew.-%, besonders bevorzugt von 2,0 Gew.-% bis 6,0 Gew.-%, ganz besonders bevorzugt von 3,0 Gew.-% bis 5,5 Gew.-% bezogen auf die Menge an Hartschaumstoff. Die Bereiche dieser Mengenangaben gelten auch für Polystyrolhartschaumstoffe enthaltend Mischungen aus grünen oder kalzinierten Steinkohlenteerpechkoksteilchen, für Mischungen aus grünen Steinkohlenteerpechkoksteilchen und Braunkohlenkoksteilchen, für Mischungen aus kalzinierten Steinkohlenteerpechkoksteilchen und Braunkohlenkoksteilchen oder für Mischungen aus grünen und kalzinierten Steinkohlenteerpechkoksteilchen und Braunkohlenkoksteilchen. Folglich enthalten Polystyrolhartschaumstoffe diese Mischungen in einer Menge von 0,5 Gew.-% bis 10,0 Gew.-%, bevorzugt von 1,0 Gew.-% bis 8,0 Gew.-%, besonders bevorzugt von 2,0 Gew.-% bis 6,0 Gew.-%, ganz besonders bevorzugt von 3,0 Gew.-% bis 5,5 Gew.-% bezogen auf die Menge an Hartschaumstoff.

Die Verwendung von Steinkohlenteerpechkoksteilchen und/oder Braunkohlenkoksteilchen ist weiterhin insofern vorteilhaft, als dass die Teilchen nach der Mahlung in der gewünschten Plättchenform erhalten werden. Zur Mahlung können Strahlmühlen ausgewählt aus der Gruppe bestehend aus Luft-, Gas- oder Dampfstrahlmühlen verwendet werden. Bevorzugt wird als Luftstrahlmühle eine Spiralstrahl- oder Gegenstrahlmühle, besonders bevorzugt eine Spiralstrahl- oder Gegenstrahlmühle aufweisend einen integrierten Sichter, eingesetzt. Durch die Verwendung dieser Mühlen werden die zu zermahlenden Teilchen derart beschleunigt, dass die auf die Teilchen einwirkenden Kräfte eine richtungsabhängige Zerkleinerung ermöglichen, d.h. es kommt zu Zug- und Reibungskräften sowie zu Partikelkollisionen, welche zu einer gewünschten Zerkleinerung der Teilchen sowie zu einer bevorzugten Teilchenform führen. Gegebenenfalls kann das Mahlgut auch noch einem externen Sichter zugeführt werden, um besonders steile Korngrößenverteilungskurven zu erhalten, d.h. hier können gröbere und feinere Teilchen gut voneinander getrennt werden Durch diese Maßnahme kann eine noch präzisere Ober- oder Unterkornbegrenzung durchgeführt werden.

Wenn die Polystyrolhartschaumstoffe als Wärmedämmstoffe in Form von Platten im Bauwesen eingesetzt werden, ist es notwendig, dass diese Dämmstoffe schwer entflammbar sind, d.h. sie bestehen die Brandtests B1 und B2 gemäß der DIN 4102. Damit die erfindungsgemäßen Polystyrolhartschaumstoffe nicht leicht entflammbar sind und die erforderlichen Brandtests bestehen, können die Hartschaumstoffe zusätzlich Flammschutzmittel enthalten. Diese Flammschutzmittel stellen organische Halogenverbindungen, vorzugsweise organische Bromverbindungen, besonders bevorzugt aliphatische, cycloaliphatische oder aromatische Bromverbindungen, und/oder Phosphorverbindungen dar. Besonders bevorzugt werden die organischen Bromverbindungen aus der Gruppe bestehend aus Hexabromcyclododecan, Pentabrommonochlorcyclohexan oder Pentabromphenylallylether ausgewählt und als Phosphorverbindungen werden besonders bevorzugt 9,10-Dihydro-9-oxa-10-phospha-phenantren-10-oxid (DOP-O) oder Triphenylphosphat (TPP) verwendet. In den erfindungsgemäßen Polystyrolhartschaumstoffen kann die erforderliche Menge an Flammschutzmittel reduziert werden, d.h. die Flammschutzmittel liegen im Polystyrolhartschaumstoff in einer Menge von weniger als 2,0 Gew.-%, bevorzugt von weniger als 1,5 Gew.-%, besonders bevorzugt von weniger als 1,0 Gew.-%, bezogen auf die Menge an Hartschaumstoff vor. Somit kann der erfindungsgemäße Polystyrolhartschaumstoff billiger und umweltfreundlicher hergestellt werden, da weniger Flammschutzmittel, insbesondere weniger organische Bromverbindungen und/oder Phosphorverbindungen, benötigt werden.

Eine kostengünstigere Herstellung des erfindungsgemäßen Polystyrolhartschaumstoffs wird auch dadurch ermöglicht, dass der Hartschaumstoff eine Dichte von 1 bis 20 kg/m³, bevorzugt von 5 bis 20 kg/m³, besonders bevorzugt von 10 bis 20 kg/m³ und ganz besonders bevorzugt von 12 bis 18 kg/m³ aufweist. Hier kommt es zu einer Materialeinsparung, da weniger Polystyrol eingesetzt werden kann.

Der erfindungsgemäße Polystyrolhartschaumstoff weist eine Wärmeleitfähigkeit von 20 mW/m·K bis 40 mW/m·K, bevorzugt von 25 mW/m·K bis 35 mW/m·K, auf.

Die vorliegende Erfindung betrifft weiterhin einen Formkörper, welcher einen erfindungsgemäßen Polystyrolhartschaumstoff enthält, und die Verwendung eines solchen Formkörpers zur Wärmedämmung. Als Formkörper können beispielsweise Platten angesehen werden, welche zur Wärmedämmung, vorzugsweise im Bauwesen, verwendet werden.

Nachfolgend wird die vorliegende Erfindung rein beispielhaft anhand von vorteilhaften Ausführungsformen und unter Bezugnahme auf die beigefügte Zeichnung beschrieben.

Dabei zeigt
- Fig. 1: das Aspektverhältnis von Plättchen, d.h. das Verhältnis des Kreisdurchmessers (D) der Fläche zu der Dicke (T) des Plättchens.

### Beispiele:

### Beispiel 1 :

Ein Styrolpolymer mit einem mittleren Molekulargewicht von 180.000 - 250.000 g/mol und einem Schmelzindex von 4,8 cm³/10 min. (ISO1133) mit 1,9 Gew.-% Hexabromcyclododecan (HBCD) und 7 Gew.-% Pentangemisch (bestehend aus n-Pentan, Iso-Pentan und Cyclopentan) wurde in einem gleichläufigen Doppelschneckenextruder aufgeschmolzen und mittels eines Sidefeeders mit 4 Gew.-% gemahlenen Steinkohlenteerpechkoks beaufschlagt. Der verwendete Steinkohlenteerpechkoks wurde in einer Spiralstrahlmühle mit integriertem Sichter gemahlen und hatte eine mittlere Korngröße d₅₀ von 7 µm (d₉₈ von 21µm, d₁₀ von 1µm). Die mit den genannten Zuschlagstoffen vermischte Polymerschmelze wurde über einen Unterwassergranulator mit einem Ausdrittsdruck von 9 bar zu EPS-Granulaten verarbeitet. Zur Vermeidung der Verklebung der Granalien wurden handelsübliche Antibackmittel wie Calciumstearat aufgestreut und dann in einem diskontinuierlichen Vorschäumer auf eine Dichte 16 kg/m³ verschäumt. Zur Messung wurden Platten herausgeschnitten, konditioniert und nach DIN 4102 auf Wärmeleitfähigkeit untersucht. Die Messung ergab eine Wärmeleitfähigkeit von 31,0 mW/m K.

### Beispiel 2:

Ein Styrolpolymer mit einem mittleren Molekulargewicht 150.000 - 350.000 g/mol und einem Schmelzindex von 14 cm³/10 min (ISO1133) mit 2,0 Gew.-% HBCD und 6 Gew.-% Pentangemisch wurde in einem gleichläufigen Doppelschnecken aufgeschmolzen und über den Einzug mit 4,5 Gew.-% gemahlenen Steinkohlenteerpechkoks beaufschlagt. Der Steinkohlenteerpechkoks wurde mit einer heißgasbetriebenen Spiralstrahlmühle gemahlen und mittels eines separaten Hochleistungssichter komplett vom Feinstaub befreit. Der gemahlene Steinkohlen-teerpechkoks hatte eine mittlere Korngröße d₅₀ von 6µm (d₉₈ von 18µm, d₁₀ von 2µm). Die Verarbeitung erfolgte gemäß Beispiel 1. Die Platten hatten nach der Verschäumung und Konditionierung eine Dichte von 15 kg/m³. Die gemessene Wärmeleitfähigkeit nach DIN 4102 erbrachte einen Wert 30,5 mW/mK.

### Beispiel 3:

Gemäß Beispiel 2 wurden ohne Änderung der Polymer-, Additiv- und Extrusionsbedingungen 4,5 Gew.-% gemahlener Steinkohlenteerpechkoks zugesetzt. Der Steinkohlenteepechkoks wurde in einer heißgasbetriebenen Gegenstrahlmühle mit integriertem Sichter auf folgende Parameter gemahlen, wobei der gemahlene Steinkohlenteerpechkoks eine mittlere Korngröße d₅₀ von 5µm (d₉₈ von 17µm, d₁₀ von 1,5µm) aufwies. Die hergestellten Platten hatten nach der Verschäumung und Konditionierung eine Dichte von 15 kg/m³. Die gemessene Wärmeleitfähigkeit nach DIN 4102 erbrachte einen Wert von 32,5 mW/mK.

### Beispiel 4:

In einem Druckbehälter mit Rührwerk wurden 420 kg monomeres Styrol vorgelegt, worin 20 kg Styrolpolymerisat gelöst wurden. Danach wurden 8 kg gemahlener Steinkohlenteerpechkoks, wie in Beispiel 2 verwendet, in der Flüssigkeit homogen verteilt. Es wurden dann 0,2 kg Dibenzoylperoxid, 2,0 kg Dicumylperoxid und 3,0 kg HBCD zugesetzt. Zu dieser Mischung wurde eine Lösung bestehend aus 490 kg vollentsalztem Wasser, 1,2 kg Natriumpolyphosphat und 2,0 kg Natriumsulfat zugesetzt. Das Gemisch wurde unter Rühren auf 90 °C erhitzt und dann innerhalb von 4 Stunden weiter auf 125 °C erhitzt. Während des Erhitzungsvorgangs wurden über eine integrierte Dosiervorrichtung nach 2 Stunden 5 kg eines Emulgators (Fettalkoholpolyglycolether) zugesetzt und danach 30 kg Pentan eindosiert. Das Gemisch wurde bei einer Temperatur von 125 °C polymerisiert. Die erhaltenen Perlen hatten einen mittleren Durchmesser von 1,8 mm. Nach den Entgasung und Konditionierung hatten die daraus hergestellten Platten eine Dichte von 16 kg/m³. Bei der Messung der Wärmeleitfähigkeit nach DIN 4102 wurde ein Wert von 32 mW/mK ermittelt.

### Beispiel 5:

Ein Styrolpolymer mit einem mittleren Molekulargewicht von 180.000 - 250.000 g/mol und einem Schmelzindex von 4,8 cm³/10 min. (ISO1133) mit 1,9 Gew.-% Hexabromcyclododecan (HBCD) und 7 Gew.-% Pentangemisch (bestehend aus n-Pentan, Iso-Pentan und Cyclopentan) wurde in einem gleichläufigen Doppelschneckenextruder aufgeschmolzen und mittels eines Sidefeeders mit 4 Gew.-% gemahlenen Braunkohlenkoks beaufschlagt. Der verwendete Braunkohlenkoks wurde in einer Spiralstrahlmühle mit integriertem Sichter gemahlen und hatte eine mittlere Korngröße d₅₀ von 5 µm (d₉₈ von 20µm, d₁₀ von 1µm). Die mit den genannten Zuschlagstoffen vermischte Polymerschmelze wurde über einen Unterwassergranulator mit einem Ausdrittsdruck von 9 bar zu EPS-Granulaten verarbeitet. Zur Vermeidung der Verklebung der Granalien wurden handelsübliche Antibackmittel wie Calciumstearat aufgesteut und dann in einem diskontinuierlichen Vorschäumer auf eine Dichte 16 kg/m³ verschäumt. Zur Messung wurden Platten herausgeschnitten, konditioniert und nach DIN 4102 auf Wärmeleitfähigkeit untersucht. Die Messung ergab eine Wärmeleitfähigkeit von 31,5 mW/mK.

Alle Angaben beziehen sich auf Gew.% bezogen auf das fertige EPS-Granulat. Die Dosierungen wurden mittels gravimetrisch arbeitenden Dosiervorrichtungen vorgenommen.

## Patentansprüche

1. Polystyrolhartschaumstoff,
**dadurch gekennzeichnet, dass**
dieser Hartschaumstoff grüne oder kalzinierte Steinkohlenteerpechkoksteilchen, Braunkohlenkoksteilchen oder Mischungen davon enthält.

2. Polystyrolhartschaumstoff nach Anspruch 1,
**dadurch gekennzeichnet, dass**
es sich bei dem Hartschaumstoff um extrudierten Polystyrol-Hartschaum (XPS) oder Polystyrol-Partikelschaum (EPS) handelt.

3. Polystyrolhartschaumstoff nach Anspruch 1 oder 2,
**dadurch gekennzeichnet, dass**
eine homogene Verteilung der grünen oder kalzinierten Steinkohlenteerpechkoksteilchen oder Braunkohlenkoksteilchen im Hartschaumstoff vorliegt.

4. Polystyrolhartschaumstoff nach Anspruch 3,
**dadurch gekennzeichnet, dass**
die grünen oder kalzinierten Steinkohleteerpechkoksteilchen oder Braunkohlekoksteilchen plättchenförmig sind.

5. Polystyrolhartschaumstoff nach Anspruch 4,
**dadurch gekennzeichnet, dass**
die grünen oder kalzinierten Steinkohlenteerpechkoksteilchen oder Braunkohlenkoksteilchen ein Aspektverhältnis von größer 2 aufweisen.

6. Polystyrolhartschaumstoff nach Anspruch 5,
**dadurch gekennzeichnet, dass**
die grünen oder kalzinierten Steinkohlenteerpechkoksteilchen oder Braunkohlenkoksteilchen einen Durchmesser d₅₀ von 0,2 bis 20 µm aufweisen.

7. Polystyrolhartschaumstoff nach Anspruch 6,
**dadurch gekennzeichnet, dass** der Braunkohlenkoks eine spezifische Oberfläche von größer 50 m²/g aufweist.

8. Polystyrolhartschaumstoff nach Anspruch 6,
**dadurch gekennzeichnet, dass**
die grünen oder kalzinierten Steinkohlenteerpechkoksteilchen oder Braunkohlenkoksteilchen in einer Menge von 0,5 Gew.-% bis 10 Gew.-%, bezogen auf die Menge an Hartschaumstoff, enthalten ist.

9. Polystyrolhartschaumstoff nach Anspruch 8,
**dadurch gekennzeichnet, dass**
die grünen oder kalzinierten Steinkohlenteerpechkoksteilchen oder Braunkohlenkoksteilchen in Strahlmühlen ausgewählt aus der Gruppe bestehend aus Luft-, Gas- oder Dampfstrahlmühlen gemahlen wurden.

10. Polystyrolhartschaumstoff nach Anspruch 9,
**dadurch gekennzeichnet, dass**
die Luftstrahlmühle eine Spiralstrahl- oder Gegenstrahlmühle darstellt.

11. Polystyrolhartschaumstoff nach Anspruch 10,
**dadurch gekennzeichnet, dass**
der Hartschaumstoff zusätzlich Flammschutzmittel enthalten kann.

12. Polystyrolhartschaumstoff nach Anspruch 11,
**dadurch gekennzeichnet, dass**
die Flammschutzmittel organische Halogenverbindungen und/oder Phosphorverbindungen darstellen.

13. Polystyrolhartschaumstoff nach Anspruch 12,
**dadurch gekennzeichnet, dass**
der Hartschaumstoff eine Dichte von 1 bis 20 kg/m³ und eine Wärmleitfähigkeit von 20 mW/m·K bis 40 mW/m·K aufweist.

14. Formkörper,
**dadurch gekennzeichnet, dass**
er einen Polystyrolhartschaumstoff nach einem der Ansprüche 1 bis 13 enthält.

15. Verwendung eines Formkörpers nach Anspruch 14 zur Wärmedämmung.
